# FASCICULE DE BREVET EUROPEEN

(11) **EP 4 256 661 B1**
(45) Date de publication et mention de la délivrance du brevet: **20.11.2024**
(21) Numéro de dépôt: 21824530.6
(22) Date de dépôt: 02.12.2021
(51) Int. Cl.: H02B 11/133, H02B 11/127

(54) **DISPOSITIF DE CHÂSSIS POUR APPAREIL ÉLECTRIQUE DE COUPURE DÉBROCHABLE ET ENSEMBLE COMPRENANT LEDIT DISPOSITIF DE CHÂSSIS ET UN TEL APPAREIL**
EINSCHUB FÜR SCHALTGERÄT UND BAUGRUPPE BEINHALTEND DEN EINSCHUB UND DAS SCHALTGERÄT
FRAME FOR DRAW-OUT ELECTRIC SWITCH AND ASSEMBLY COMPRISING SAID DRAW-OUT FRAME AND THE SWITCH

(30) Priorité: 04.12.2020 FR 2012667
(43) Date de publication de la demande: 11.10.2023
(73) Titulaire: HAGER-ELECTRO SAS, 67210 Obernai (FR)
(72) Inventeur: ELOY, Stéphane, 67810 HOLTZHEIM (FR); IZARD, Jérôme, 67380 LINGOLSHEIM (FR); PUH, Nikola, 67120 DUTTLENHEIM (FR)
(74) Mandataire: Cabinet Nuss
(86) Numéro de dépôt international: PCT/EP2021/084021
(87) Numéro de publication internationale: WO 2022/117748

(56) Documents cités:
- FR-A1- 2 773 648
- JP-A- 2004 304 858

## Description

La présente invention concerne le domaine des appareils électriques de coupure et plus particulièrement des appareils électriques de coupure débrochables tels que les disjoncteurs débrochables et pour objet un dispositif de châssis pour appareil électrique de coupure débrochable et un ensemble comprenant ledit dispositif de châssis et un tel appareil.

Les appareils électriques de coupure débrochables, dénommés par la suite appareils, du type disjoncteurs débrochables, sont prévus et configurés chacun pour être inséré dans l'espace interne d'un châssis fixe en étant connecté fonctionnellement, c'est à dire mécaniquement et électriquement, dans ce dernier et pour être extrait dudit châssis fixe après avoir été déconnecté, mécaniquement et électriquement.

Le châssis fixe présente à cet effet une forme de caisson ou de cadre avec une partie arrière comprenant des bornes de raccordement principales permettant le raccordement électrique à un réseau de distribution électrique et un des bornes de raccordement secondaires permettant le raccordement électrique à une alimentation basse tension. La partie avant du châssis fixe comprend une ouverture d'entrée permettant d'insérer l'appareil dans le châssis fixe par un mouvement de coulissement. L'appareil comprend des connecteurs principaux permettant sa connexion aux bornes de raccordement principales et des connecteurs secondaires permettant sa connexion aux bornes de raccordement secondaires lorsque ledit appareil est inséré fonctionnellement dans le châssis.

Pour réaliser l'insertion, avec coulissement, de l'appareil dans le châssis, ledit châssis comprend des parois latérales munies, sur leur face interne, de glissières aptes et destinées à supporter et guider l'appareil, par l'intermédiaire de moyens de roulement ou de glissement tels que des galets, dans un mouvement de translation entre sa position extraite du châssis et sa position insérée dans le châssis.

Le châssis comporte en outre un système d'embrochage comportant un mécanisme de transmission comportant un arbre menant ou primaire, un arbre mené ou secondaire et une transmission reliant ces derniers entre eux de sorte que la rotation de l'arbre menant entraîne la rotation de l'arbre mené via ladite transmission. L'arbre mené est disposé dans la partie arrière du châssis en s'étendant perpendiculairement à l'arbre menant et aux parois latérales munies de glissières. La transmission comporte, d'une part, une roue dentée (pignon) reliée axialement à l'arbre mené et, d'autre part, une vis sans fin coopérant avec la roue dentée par engrenage en étant intégrée dans ou fixé sur l'arbre menant de sorte que la rotation de l'arbre menant entraîne la rotation de la vis sans fin et de la roue dentée, ce qui a pour effet d'entraîner la rotation de l'arbre mené solidaire de la roue dentée.

Le système d'embrochage comprend en outre un organe de manoeuvre amovible du type manivelle permettant d'actionner le mécanisme de transmission. A cet effet, la manivelle est introduite dans une ouverture d'actionnement située dans la partie avant du châssis dans l'axe de l'arbre menant. Lorsque la manivelle est insérée fonctionnellement dans ladite ouverture d'actionnement, ladite manivelle est raccordée fonctionnellement à l'arbre menant de sorte que la rotation de la manivelle entraîne la rotation de l'arbre menant pour actionner le mécanisme de transmission.

L'arbre mené est raccordé à l'appareil inséré dans le châssis par l'intermédiaire de moyens de raccordement tels que des cames de sorte à transformer le mouvement de rotation de l'arbre mené en un mouvement de translation de l'appareil dans le châssis et par rapport à ce dernier suivant un axe de translation perpendiculaire à l'axe de rotation l'arbre mené et parallèle à l'axe de rotation de l'arbre menant. La translation est rendue possible par la présence des glissières dans les parois latérales du châssis.

L'appareil inséré fonctionnellement dans le châssis, lors de la rotation de la manivelle actionnant le mécanisme de transmission, est déplacé dans le châssis dans trois positions ou états à savoir un(e) position ou état, dit(e) position ou état connecté(e) ou embroché(e), dans laquelle ou lequel le disjoncteur débrochable est connecté aux bornes de raccordement principales et aux bornes de raccordement secondaires du châssis, un(e) position ou état déconnecté(e), dit(e) position ou état déconnecté(e) ou débroché(e), dans laquelle ou lequel le disjoncteur débrochable n'est connecté ni aux bornes de raccordement principales ni aux bornes de raccordement secondaires et peut être en conséquence extrait du châssis et un(e) position ou état intermédiaire, dit(e) position ou état test, permettant de tester ou de contrôler l'état de l'appareil et dans laquelle ou lequel l'appareil est connecté uniquement aux bornes de raccordement secondaires, c'est-à-dire qu'il n'est pas connecté aux bornes de raccordement principales.

Le système d'embrochage comprend en outre un mécanisme de verrouillage principal comprenant un premier organe de verrouillage mobile verticalement, c'est-à-dire perpendiculairement à l'arbre menant et à l'arbre menés en considérant ces derniers dans un plan horizontal, se présentant sous la forme d'une plaque allongée le long d'un axe vertical. Le premier organe de verrouillage est monté sur la partie avant du châssis en étant apte à être déplacé dans une position basse, dite position de fermeture, obturant l'ouverture d'actionnement en empêchant, lorsqu'il est maintenu bloqué dans cette position de fermeture, l'introduction de la manivelle dans cette dernière et une position haute, dite position d'ouverture, permettant ladite introduction. Le premier organe de verrouillage est rappelé automatiquement dans sa position de fermeture grâce à un ressort et est amené dans sa position d'ouverture, après déblocage de sa position de fermeture, lors de l'introduction de la manivelle dans l'ouverture d'actionnement par coopération de ladite manivelle avec un élément ou une surface du type rampe ou came intégrée dans la partie basse du premier organe de verrouillage.

Le mécanisme de verrouillage principal comprend, d'autre part, un deuxième organe de verrouillage, généralement en forme de clé, comportant une tête permettant sa préhension par l'opérateur et une tige s'étendant essentiellement dans le châssis perpendiculairement au premier organe de verrouillage et étant apte à coopérer avec le premier organe de verrouillage. La coopération entre la tige du premier organe de verrouillage et la plaque du premier organe de verrouillage est réalisée par la coopération entre des parois d'encoches ou d'orifices pratiqués dans lesdits premier et deuxième organes de verrouillage. La tête est munie d'un oeillet apte à recevoir l'anneau d'un cadenas traditionnel. La tige est également apte à coopérer avec une glissière pratiquée à l'intérieur du châssis pour permettre le déplacement du deuxième organe de verrouillage en translation horizontale parallèlement à l'arbre menant.

Le deuxième organe de verrouillage peut ainsi être déplacé dans une première position ayant pour effet de bloquer, grâce à ladite coopération, le premier organe de verrouillage dans sa position de fermeture et dans une deuxième position ayant pour effet de débloquer la position de fermeture du premier organe de verrouillage de sorte à permettre son déplacement vers sa position d'ouverture. Dans la position d'ouverture du premier organe de verrouillage correspondant à la deuxième position du deuxième organe de verrouillage, ladite coopération, a pour effet d'empêcher le déplacement du deuxième organe de verrouillage jusque dans sa première position. La première position du deuxième organe de verrouillage permet également, du fait de la position extraite/sortie de la tête munie de l'œillet, de mettre le cadenas dans l'œillet. La première position du deuxième organe de verrouillage, avec le cadenas, permet ainsi de verrouiller l'actionnement de l'arbre menant par la manivelle qui ne peut être introduite dans l'ouverture d'actionnement fermée par le premier organe de verrouillage bloqué en position de fermeture et de verrouiller l'enfoncement du premier organe de verrouillage, bloqué par le cadenas, jusque dans sa deuxième position, assurant ainsi la mise en sécurité du châssis.

Enfin, pour renforcer cette mise en sécurité du châssis, le système d'embrochage comprend en outre un mécanisme de verrouillage additionnel permettant, dans un état de verrouillage, de bloquer le mouvement cinématique du mécanisme de transmission et, dans un état de déverrouillage, de débloquer ledit mouvement. Ce mécanisme de verrouillage additionnel comprend généralement un bouton de verrouillage disposé sous l'ouverture d'actionnement et apte à être sollicité manuellement dans une position enfoncé dans le châssis mettant, par l'intermédiaire d'un mécanisme de liaison et d'entraînement, le mécanisme de verrouillage additionnel dans son état de déverrouillage.

Un tel ensemble comprenant un tel dispositif de châssis et appareil est décrit et illustré, par exemple, dans le document FR2773648.

Toutefois, dans un tel dispositif de châssis, le mécanisme de verrouillage additionnel peut être activé et donc déverrouillé dans la première position du premier organe de verrouillage en forme de clé, c'est-à-dire dans sa position de verrouillage par cadenas, voire dans sa deuxième position, ce qui ne permet pas de conférer une sécurité optimale. En outre, le mécanisme de verrouillage additionnel actionné par un bouton de verrouillage, qui vient s'ajouter au premier organe de verrouillage et au deuxième organe de verrouillage, augmente le prix de revient du système et rend complexe l'actionnement du mécanisme de verrouillage additionnel.

La présente invention a pour but de pallier ces inconvénients en proposant un dispositif de châssis pour appareil électrique de coupure débrochable permettant d'assurer une sécurité optimale tout en simplifiant l'actionnement du mécanisme de verrouillage additionnel et en réduisant son prix de revient.

A cet effet, le dispositif de châssis pour appareil électrique de coupure débrochable, ledit dispositif de châssis comprenant un châssis apte à recevoir un appareil électrique de coupure débrochable et un système d'embrochage, monté dans le châssis, comprenant un mécanisme de transmission mécanique apte à être raccordé fonctionnellement à un tel appareil inséré dans ledit châssis et à être actionné dans plusieurs positions de transmission correspondant chacune à une position fonctionnelle de l'appareil, un organe de manoeuvre amovible permettant d'actionner le mécanisme de transmission lorsqu'il est inséré fonctionnellement dans une ouverture d'actionnement du châssis, un mécanisme de verrouillage principal comprenant un premier organe de verrouillage mobile entre une position de fermeture empêchant l'insertion de l'organe de manoeuvre dans l'ouverture d'actionnement et une position d'ouverture permettant ladite insertion et un deuxième organe de verrouillage mobile apte à être déplacé manuellement entre une première position bloquant le premier organe de verrouillage dans sa position de fermeture et une deuxième position le débloquant et un mécanisme de verrouillage additionnel apte à être mis, à chaque position de transmission, d'une part, lorsque le premier organe de verrouillage se trouve dans l'une quelconque de ses première et deuxième positions, dans un état de verrouillage bloquant le mouvement cinématique du mécanisme de transmission et, d'autre part, dans un état de déverrouillage débloquant ledit mouvement, se caractérise essentiellement en ce que le deuxième organe de verrouillage est apte à coopérer avec le mécanisme de verrouillage additionnel et à être déplacé manuellement, lorsque le premier organe de verrouillage est dans sa position d'ouverture, dans une troisième position actionnant, grâce à ladite coopération, le mécanisme de verrouillage additionnel de sorte à le mettre dans son état de déverrouillage.

La présente invention a également pour objet un ensemble comprenant un dispositif de châssis et un appareil électrique de coupure débrochable, ledit dispositif de châssis comprenant un châssis recevant ledit appareil électrique de coupure débrochable et un système d'embrochage monté dans le châssis et se caractérisant en ce que le dispositif de châssis consiste en un dispositif de châssis selon la présente invention.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

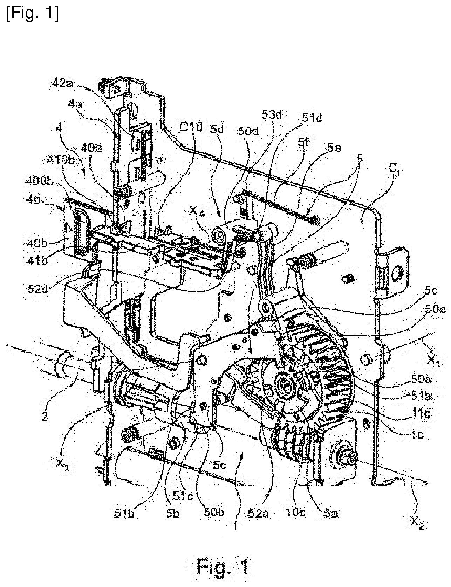

[Fig. 1] représente une vue en perspective partiel du dispositif de châssis selon la présente invention, dans une configuration où le deuxième organe de verrouillage se trouve, ou est enfoncé, dans sa deuxième position et le premier organe de verrouillage est mis dans sa position d'ouverture par l'organe de manoeuvre inséré fonctionnellement dans l'ouverture d'actionnement et dans une configuration où le mécanisme de transmission peut être actionné successivement dans trois positions de transmission correspondant chacune à une position déconnectée, test ou connectée d'un appareil électrique de coupure débrochable inséré fonctionnellement dans le châssis, ledit mécanisme de transmission étant représenté dans une position de transmission correspondant à la position test et son mouvement cinématique étant bloqué dans cette position de transmission par le mécanisme de verrouillage additionnel mis à l'état de verrouillage,
[Fig. 2] représente une vue en plan du dispositif de châssis représenté sur la figure 1, sans l'organe de manoeuvre inséré dans l'ouverture d'actionnement et avec le premier organe de verrouillage mis dans sa position de fermeture sous l'action d'un ressort, et dans une configuration où le mécanisme de transmission a été actionné dans une position de transmission correspondant à la position déconnectée et son mouvement cinématique est bloqué dans cette position par le mécanisme de verrouillage additionnel mis à l'état de verrouillage,
[Fig. 3] représente une vue en perspective de détail des premier et deuxième organes de verrouillage du dispositif de châssis représenté sur la figure 2,
[Fig. 4] montre le dispositif de châssis représenté sur la figure 2 avec le deuxième organe de verrouillage déplacé dans sa première position, à l'état non cadenassé, et n'étant plus en contact avec l'ensemble de liaison,
[Fig. 5] est vue de détail en perspective du dispositif de châssis représenté sur la figure 4,
[Fig. 6] montre le dispositif de châssis représenté sur la figure 2 à l'état inséré de l'organe de manoeuvre dans l'ouverture d'actionnement, et avec le premier organe de verrouillage déplacé dans sa position d'ouverture sous l'effet de l'insertion de l'organe de verrouillage,
[Fig. 7] est une vue de détail du dispositif de châssis représenté sur la figure 6, montrant la coopération entre la tige du deuxième organe de manoeuvre et le premier organe de manoeuvre empêchant le déplacement du deuxième organe de manoeuvre dans sa première position,
[Fig. 8] est une vue en plan du dispositif de châssis représenté sur la figure 6 dans une configuration où le deuxième organe de verrouillage est déplacé/enfoncé manuellement dans sa troisième position actionnant le mécanisme de verrouillage additionnel dans son état de déverrouillage,
[Fig. 9] est une vue de détail du dispositif de châssis représenté sur la figure 8,
[Fig. 10] montre le dispositif de châssis représenté sur la figure 8, à l'état déverrouillé du mécanisme de verrouillage additionnel, dans une configuration où le mécanisme de transmission est actionné par l'organe de manoeuvre et se trouve entre la position de transmission représentée sur la figure 8 correspondant à la position déconnectée et la position de transmission suivante représentée sur la figure 1 correspondant à la position test,
[Fig. 11] est une vue de détail du dispositif de châssis représenté sur la figure 10,
[Fig. 12] montre le dispositif de châssis représenté sur la figure 10 dans la position de transmission correspondant à la position test et à l'état de verrouillage du mécanisme de verrouillage additionnel, tandis que le deuxième organe de verrouillage a été déplacé automatiquement, depuis sa troisième position, dans sa deuxième position sous l'effet de l'actionnement de l'ensemble de liaison par le moyen de rappel,
[Fig. 13] est une vue en perspective du dispositif de châssis selon la présente invention, sans l'organe de manoeuvre,
[Fig. 14] est une vue en perspective d'un ensemble selon la présente invention comprenant le dispositif de châssis représenté sur la figure 10 et un appareil électrique de coupure débrochable apte et destiné à être inséré fonctionnellement dans l'espace interne du châssis dudit dispositif de châssis,

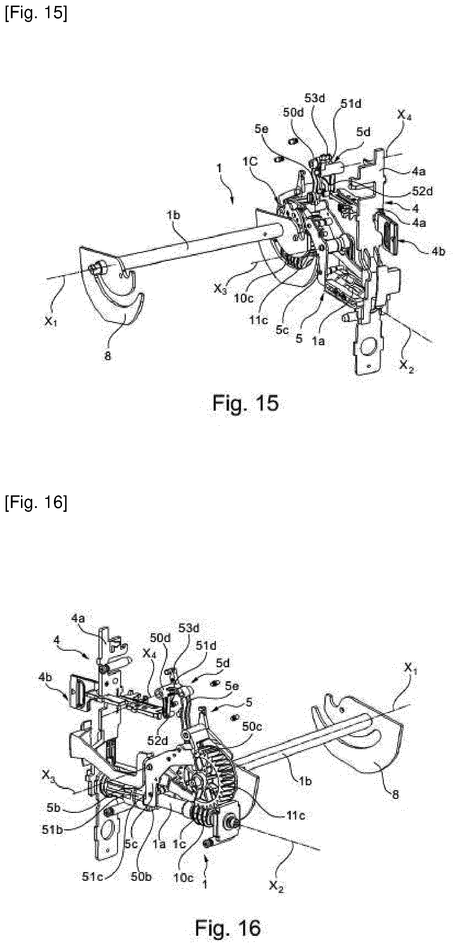

[Fig. 15] est une vue partielle en perspective du système d'embrochage du dispositif de châssis,
[Fig. 16] montre le système d'embrochage représenté sur la figure 15 sous un autre angle de vue.

Les figures montrent un dispositif de châssis, selon la présente invention, pour appareil électrique de coupure débrochable, ledit dispositif de châssis comprenant un châssis C apte à recevoir un appareil D électrique de coupure débrochable, dénommé ci-après appareil D, et un système d'embrochage monté dans le châssis C.

Le système d'embrochage comprend :
- un mécanisme de transmission 1 mécanique apte à être raccordé fonctionnellement à un tel appareil D lors de son insertion dans ledit châssis C et à être actionné dans plusieurs positions de transmission correspondant chacune à une position fonctionnelle de l'appareil D inséré dans le châssis C,
- un organe de manoeuvre 2 amovible permettant, lorsqu'il est inséré fonctionnellement dans une ouverture d'actionnement 3 du châssis C, d'actionner le mécanisme de transmission 1,
- un mécanisme de verrouillage principal 4 comprenant, d'une part, un premier organe de verrouillage 4a mobile entre une position, dite position de fermeture, apte à empêcher l'insertion de l'organe de manoeuvre 2 dans l'ouverture d'actionnement 3 et une position, dite position d'ouverture, permettant ladite insertion et, d'autre part, un deuxième organe de verrouillage 4b mobile apte à être déplacé manuellement entre une première position bloquant le premier organe de verrouillage 4a dans sa position de fermeture et une deuxième position débloquant ce dernier et,
- un mécanisme de verrouillage additionnel 5 apte à être mis, à chaque position de transmission, d'une part, lorsque le premier organe de verrouillage 4a se trouve dans l'une quelconque de ses première et deuxième positions, dans un état de verrouillage bloquant le mouvement cinématique du mécanisme de transmission 1 et, d'autre part, dans un état de déverrouillage débloquant ledit mouvement.

Conformément à la présente invention le deuxième organe de verrouillage 4b est apte à coopérer avec le mécanisme de verrouillage additionnel 5 et à être déplacé manuellement, lorsque le premier organe de verrouillage 4a est dans sa position d'ouverture, dans une troisième position actionnant, grâce à ladite coopération, le mécanisme de verrouillage additionnel 5 de sorte à le mettre dans son état de déverrouillage.

Le mécanisme de transmission 1 est apte à être raccordé à un appareil D à l'aide de moyens de raccordement connus et non représentés sur les figures annexées.

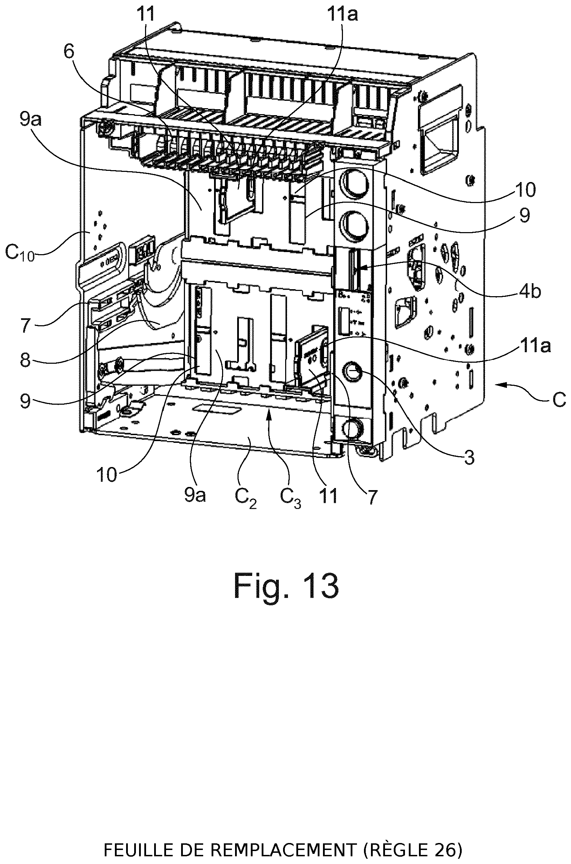

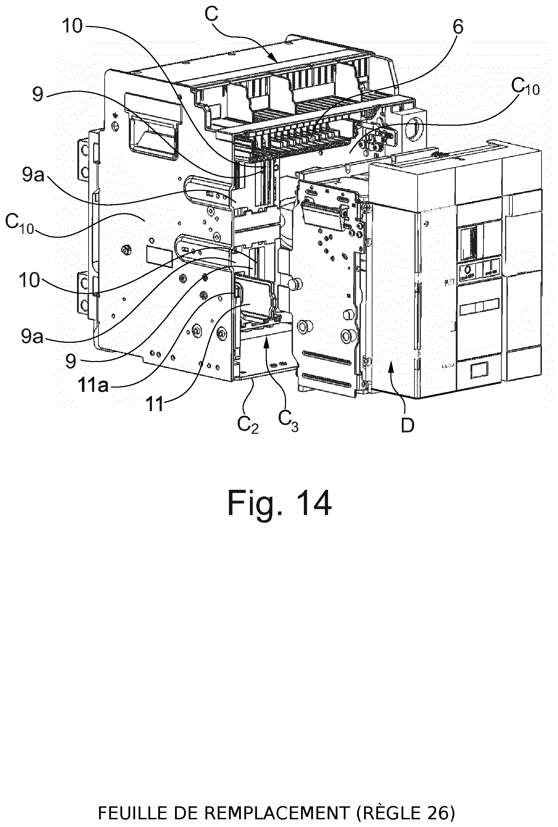

Si on se réfère aux figures 13 et 14, on peut voir que le châssis C fixe peut présenter, de manière connue, une forme de caisson ou de cadre avec une partie arrière comprenant des bornes de raccordement principales, non visibles, permettant le raccordement électrique à un réseau de distribution électrique et des bornes de raccordement secondaires 6 permettant le raccordement électrique à une alimentation basse tension. La partie avant du châssis fixe comprend une ouverture d'entrée C2 permettant d'insérer l'appareil D dans un espace de réception C3 du châssis fixe. L'appareil D, par exemple du type disjoncteur débrochable, peut comprendre des connecteurs principaux permettant sa connexion aux bornes de raccordement principales et des connecteurs secondaires permettant sa connexion aux bornes de raccordement secondaires lorsque ledit appareil D est inséré fonctionnellement dans le châssis C.

L'appareil D inséré fonctionnellement dans le châssis C peut ainsi, de manière connue, lors de la rotation de l'organe de manoeuvre 2, par exemple en forme de manivelle, actionnant le mécanisme de transmission 1, être déplacé dans le châssis C dans plusieurs positions fonctionnelles et de préférence dans trois positions fonctionnelles, à savoir une position connectée ou embrochée, dans laquelle l'appareil D est connecté aux bornes de raccordement principales et aux bornes de raccordement secondaires 6, une position déconnectée ou débrochée dans laquelle l'appareil D n'est connecté ni aux bornes de raccordement principales ni aux bornes de raccordement secondaires et peut être en conséquence extrait du châssis C et une position intermédiaire ou test permettant de tester ou de contrôler l'état de l'appareil D et dans laquelle ledit appareil D est connecté uniquement aux bornes de raccordement secondaires, c'est-à-dire qu'il n'est pas connecté aux bornes de raccordement principales.

Pour réaliser l'insertion de l'appareil D dans le châssis C, ce dernier peut comprendre, à l'instar des châssis de ce type connus, des parois latérales C10 s'étendant verticalement et étant munies, sur leur face interne, de glissières 7 aptes et destinées à supporter et guider l'appareil électrique de coupure débrochable D, par l'intermédiaire de moyens de roulement ou de glissement tels que des galets, dans un mouvement de translation entre sa position extraite du châssis et sa position insérée dans le châssis C.

Le mécanisme de verrouillage additionnel 5, selon la présente invention, peut comprendre :
- un ensemble de blocage 5a, 5b, 5c mobile configuré pour être entraîné dans un état de blocage du mouvement cinématique du mécanisme de transmission 1 mettant le mécanisme de verrouillage additionnel 5 dans son état de verrouillage et dans un état de déblocage dudit mouvement cinématique mettant le mécanisme de verrouillage additionnel 5 dans son état de déverrouillage et,
- un ensemble de liaison 5d, 5e apte à coopérer avec le deuxième organe de verrouillage 4b et relié audit ensemble de blocage 5a, 5b, 5c,
- et un moyen de rappel 5f,
ledit ensemble de liaison 5d, 5e étant apte à être actionné, d'une part, par le deuxième organe de verrouillage 4b lors de son déplacement dans sa troisième position de sorte à entraîner ledit ensemble de blocage 5a, 5b, 5c dans son état de déblocage et, d'autre part, par le moyen de rappel 5f de sorte à entraîner l'ensemble de blocage 5a, 5b, 5c dans son état de blocage.

On comprendra que l'état de blocage de l'ensemble de blocage 5a, 5b, 5c est réalisé automatiquement, comme cela est connu des dispositifs actuels, dans chaque position de transmission et que le déblocage sollicité manuellement permet alors de changer de position de transmission.

Dans une forme préférentielle de l'invention, l'ensemble de liaison 5d, 5e coopère avec le deuxième organe de verrouillage 4b de sorte que le déplacement du deuxième organe de verrouillage 4b dans sa deuxième position depuis sa troisième position est réalisé automatiquement sous la sollicitation du moyen de rappel 5f lors de son actionnement de l'ensemble de liaison 5d, 5e entraînant l'ensemble de blocage 5a, 5b, 5c dans son état de blocage.

Dans une forme de réalisation connue, le mécanisme de transmission 1 peut comprendre un arbre menant 1a s'étendant dans l'axe de l'ouverture d'actionnement 3 et étant apte à être relié à l'organe de manoeuvre 2 lorsque ce dernier est inséré fonctionnellement dans l'ouverture d'actionnement 3, un arbre mené 1b d'axe de rotation X1 perpendiculaire à l'axe de rotation X2 de l'arbre menant 1a et permettant le raccordement fonctionnel à un appareil D électrique de coupure débrochable, une transmission 1c reliant l'arbre menant 1a à l'arbre mené 1b de sorte que la rotation de l'arbre menant 1a, sous l'effet de l'actionnement de l'organe de manoeuvre 2, entraîne la rotation de l'arbre mené 1b.

Toujours de manière connue, le raccordement de l'arbre mené 1b à l'appareil D peut être réalisé par l'intermédiaire de moyens de raccordement tels que des cames 8 lorsque celui-ci est inséré dans le châssis de sorte à transformer le mouvement de rotation de l'arbre mené 1b en un mouvement de translation de l'appareil D dans le châssis et par rapport à ce dernier suivant un axe de translation perpendiculaire à l'axe de rotation X1 l'arbre mené 1b et parallèle à l'axe de rotation X2 de l'arbre menant 1a. La translation est rendue possible par la présence des glissières 7 dans le châssis C.

Dans une forme de réalisation préférentielle du mécanisme de transmission 1 selon la présente invention, l'ensemble de blocage 5a, 5b, 5c peut être configuré, dans son état de blocage, pour bloquer la rotation de l'arbre mené 1b et/ou la rotation de l'arbre menant 1a et, dans son état de déblocage, pour débloquer la ou lesdites rotation(s).

Dans un mode de réalisation préférentiel de l'ensemble de blocage 5a, 5b, 5c, celui-ci peut comprendre :
- au moins une première pièce de blocage 5a solidaire en rotation de l'arbre mené 1b et munie d'une pluralité de logements 50a, 51a, 52a indexés chacun sur l'une des positions de transmission et/ou une deuxième pièce de blocage 5b solidaire en rotation de l'arbre menant 1b et munie d'une pluralité de logements 50b indexés chacun sur l'une des positions de transmission et,
- au moins un levier de blocage 5c coopérant avec la ou lune des première(s) pièce(s) de blocage 5a et avec la deuxième pièce de blocage 5b et étant muni d'un premier élément de blocage 50c et/ou d'un deuxième élément de blocage 51c.

Le ou chaque premier élément de blocage 50c et/ou le ou chaque deuxième élément de blocage 51c peut prendre, par exemple, une forme d'ergot, de dent ou de crochet.

Le ou chaque levier de blocage 5c peut être relié à l'ensemble de liaison 5d, 5e de sorte à être entraîné, sous l'effet de l'actionnement dudit ensemble de liaison 5d, 5e :
- dans une première position de déplacement mettant l'ensemble de blocage 5a, 5b, 5c dans son état de blocage et dans laquelle le premier élément de blocage 50c est inséré dans l'un des logement(s) 50a, 51a, 52a de la ou de l'une des première(s) pièce(s) de blocage 5a et/ou le deuxième élément de blocage 51c est inséré dans l'un des logement(s) 50b, 51b, 52b de la deuxième pièce de blocage 5b et,
- une deuxième position de déplacement mettant l'ensemble de blocage 5a, 5b, 5c dans son état de déblocage et dans laquelle le premier élément de blocage 50c est retiré du logement 50a, 51a, 52a correspondant et/ou le deuxième élément de blocage 51c est retiré du logement 50b, 51b, 52b correspondant.

La transmission 1c peut comprendre de manière connue une vis sans fin 10c solidaire de l'arbre menant 1a et un pignon 11c ou autre organe similaire telle qu'une roue dentée 11c solidaire de l'arbre mené 1b. En outre l'ensemble de blocage 5a, 5b, 5c peut comprendre une paire de leviers de blocage 5c s'étendant de part et d'autre du pignon 11c et une paire de premières pièces de blocage 5a s'étendant de part et d'autre de la transmission 1c de sorte que l'un des leviers de blocage 5c coopère avec l'une des première(s) pièce(s) de blocage 5a et l'autre levier 5c coopère avec l'autre première pièce de blocage 5a.

De préférence, le ou chaque levier de blocage 5c est monté pivotant autour d'un axe de pivotement X3 parallèle à l'axe de rotation X1 de l'arbre mené 1b et situé entre l'arbre menant 1a et le deuxième organe de verrouillage 4b. En outre, le ou chaque levier de blocage 5c peut comprendre deux extrémités de blocage situées de part et d'autre de son axe de pivotement X3, l'une desdites extrémités de blocage comportant le premier élément de blocage 50c et l'autre extrémité comportant le deuxième élément de blocage 51c.

Dans une forme préférentielle, la première pièce de blocage 5a peut présenter une forme de disque ou cylindrique d'axe confondu avec l'axe de rotation X1 de l'arbre mené 1b et la deuxième pièce de blocage 5b peut présenter une forme de disque ou cylindrique d'axe confondu avec l'axe de rotation X2 de l'arbre menant 1a. En outre, le ou chaque logement 50a, 51a, 52a de la première pièce de blocage 5a peut être pratiqué dans sa surface périphérique et le ou chaque logement 50a, 51a, 52a de la deuxième pièce de blocage 5b peut être pratiquée dans une face de la deuxième pièce de blocage 5b perpendiculaire à l'axe de rotation X2 de l'arbre menant 1a.

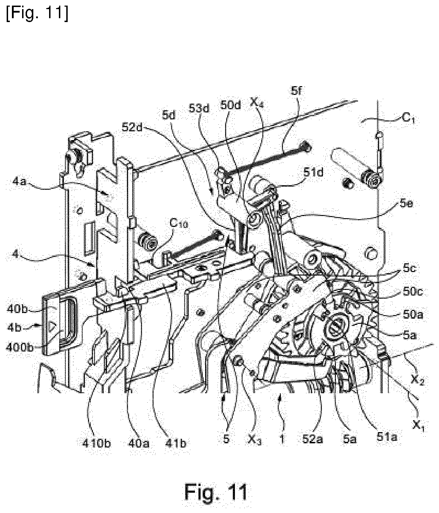

Si on se réfère aux figures 1, 2, 4, 5, 6, 8, 9, 10, 11 et 12, on peut voir que, dans une forme préférentielle de l'ensemble de liaison 5d, 5e selon la présente invention, celui-ci peut comprendre une pièce rotative en étoile 5d comportant un corps central rotatif 50d monté en rotation autour d'un axe de rotation X4, de préférence parallèle à l'axe de rotation X1 de l'arbre mené 1b, et un élément de transmission 5e. Le corps central rotatif 50d porte au moins deux branches de liaison 51d, 52d, 53d s'étendant radialement dudit corps central rotatif 50d, à savoir une première branche de liaison 51d reliée, par l'élément de transmission 5e, à l'ensemble de blocage 5a, 5b, 5c et une deuxième branche de liaison 52d apte et destinée à coopérer, par contact, avec le deuxième organe de verrouillage 4b de sorte que le déplacement dudit organe de verrouillage 4b dans sa troisième position puisse actionner la rotation du corps central rotatif 50d dans un premier sens R1 entraînant l'ensemble de blocage 5a, 5b, 5c dans sa position de déblocage. En outre, le moyen de rappel 5f peut être apte à solliciter la rotation de la pièce rotative en étoile 5d dans un deuxième sens de rotation R2, contraire audit premier sens de rotation R1, de sorte à entraîner automatiquement l'ensemble de blocage 5a, 5b, 5c dans sa position de blocage.

Le premier organe de verrouillage 4a peut être mobile dans une direction perpendiculaire aux axes de rotation X1, X2 des arbres menant et mené 1a, 1b et le deuxième organe de verrouillage 4b peut être mobile dans une direction parallèle à l'axe de rotation X2 de l'arbre menant 1a.

Le châssis C peut comprendre une paroi de montage C1 perpendiculaire à l'arbre mené 5b et sur laquelle est monté le mécanisme de transmission 1. Cette paroi de montage peut former un côté, de préférence un côté interne, de l'une des parois latérales du châssis C comprenant les glissières 7. Le mécanisme de transmission 1 est plus particulièrement monté sur la face externe de la paroi de montage C10 opposée à la face interne de ladite paroi de montage C10 comprenant les glissières.

En outre, de préférence, le deuxième organe de verrouillage 4b peut être déplacé, par rapport au châssis C fixe, dans ses première, deuxième et troisième positions, en étant monté en coulissement dans une rainure de coulissement C10 pratiquée dans ladite paroi de montage C1 et s'étendant parallèlement à l'arbre menant 5a. Ainsi, par rapport aux châssis actuels prévoyant une rainure de coulissement uniquement pour les première et deuxième positions, la rainure de coulissement C10 du châssis C selon la présente invention est adaptée pour permettre le coulissement du deuxième organe de verrouillage 4b jusque dans sa troisième position.

Le moyen de rappel 5f peut consister en ou comprendre, par exemple, un ressort de traction tel que représenté sur les figures 1, 2, 4, 6, 8, 10, 11 et 12 ou un ressort de compression. Dans ce cas, la présente invention peut prévoir, comme on peut le voir également sur lesdites figures, que le corps central rotatif 50d porte une troisième branche 53d reliée audit moyen de rappel 5f consistant en un ressort de traction ou de compression fixé sur le châssis C, le cas échéant sur la paroi de montage C1. Dans une autre forme de réalisation non représentée sur les figures annexées, le moyen de rappel 5f peut consister en un ressort de torsion relié au corps central rotatif 50d pour solliciter directement ce dernier. Dans cette dernière forme de réalisation du moyen de rappel 5f consistant en un ressort de torsion, le corps central rotatif 50d ne nécessite pas une telle troisième branche 53d. Dans une autre forme de réalisation, non représentée, le moyen de rappel 5f peut être la gravité, mais ce qui nécessite une orientation verticale de la paroi de montage C1 du châssis C.

Le deuxième organe de verrouillage 4b peut présenter une forme de clé comprenant une tête 40b munie d'un oeillet 400b et une tige 41b apte à coopérer avec le premier organe de verrouillage 4a et avec le mécanisme de verrouillage additionnel 5, le cas échéant avec l'ensemble de liaison 5d, 5e, le cas échéant avec la deuxième branche de liaison 52d défini dans la revendication 9.

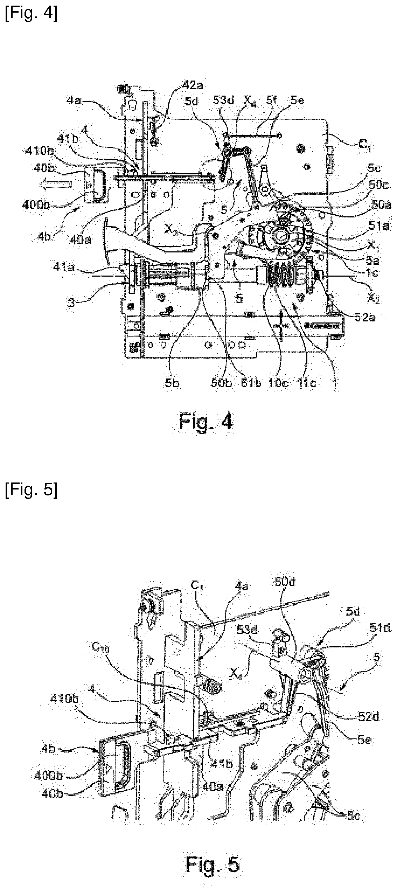

L'oeillet 400b permet de verrouiller le deuxième organe de verrouillage 4b dans sa première position (figures 4 et 5), par exemple au moyen d'un cadenas traditionnel, non représenté, fermé sur l'œillet 400b, de sorte à empêcher son/sa déplacement/translation dans sa deuxième position depuis sa première position.

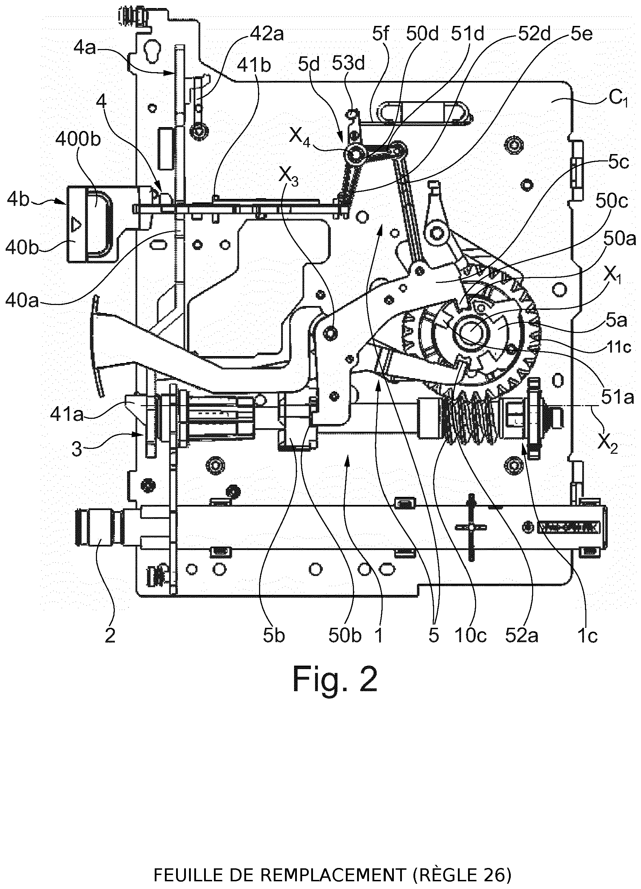

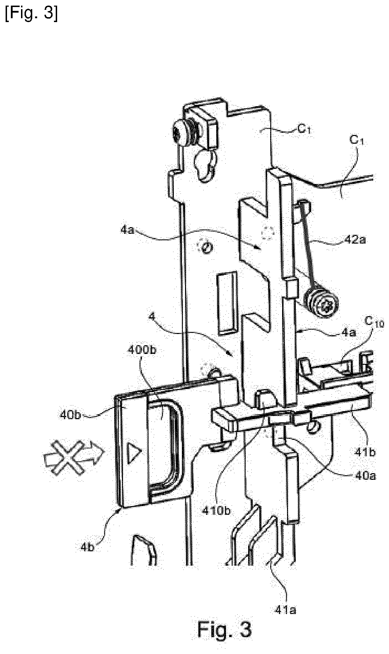

Lorsque le cadenas est enlevé, le deuxième organe de verrouillage 4b peut être déplacé dans sa deuxième position. Toutefois, dans cette deuxième position (figures 2, 3), le deuxième organe de verrouillage 4b est bloqué par le premier organe de verrouillage 4a, lorsque celui-ci est dans sa position de fermeture, ce qui empêche le déplacement du deuxième organe de verrouillage 4b vers sa troisième position permettant de déverrouiller le mécanisme de verrouillage additionnel 5. Ce blocage en déplacement/translation du deuxième organe de verrouillage 4b, par le premier organe de verrouillage 4a, peut être réalisé grâce à une butée 410b située sur sa tige 41b et venant en butée contre le premier organe de verrouillage 4a. Dans la position d'ouverture du premier organe de verrouillage 4a (figures 1, 6 et 7), le premier organe de verrouillage 4b peut être déplacé vers ses deuxième et troisième positions. En effet, comme on peut le voir sur les figures 1, 6 et 7 dans la position d'ouverture du premier organe de verrouillage 4a, une ouverture traversante 40a pratiquée dans ledit premier organe de verrouillage 4a vient se positionner en regard de la butée 410 de sorte à permettre son passage au travers de ladite ouverture traversante 40a rendant possible le déplacement/translation du deuxième organe de verrouillage 4b vers sa troisième position.

Le premier organe de verrouillage 4a peut être déplacé de sa position de fermeture vers sa position d'ouverture au moyen de l'organe de manoeuvre 2 lors de son introduction dans l'ouverture d'actionnement 3 du châssis C au moyen d'une rampe ou came 41a que peut comprendre le premier organe de mannoeuvre 4a et qui coopère avec l'organe de manoeuvre 2 de sorte que le déplacement de l'organe de manoeuvre 2, lors de son introduction dans le châssis C, entraîne le déplacement du premier organe de verrouillage 4a vers sa position d'ouverture (figures 1, 6, 8, 7, 10, 9, 12). Le premier organe de verrouillage 4a peut être rappelé au moyen d'un ressort 42a, par exemple un ressort de traction, dans sa position de fermeture, lorsque l'organe de manoeuvre 2, qui bloque ce dernier dans la position d'ouverture, est retiré de l'ouverture d'actionnement 3 (figure 2, 3, 4, 5). Ce principe est connu de l'art antérieur et ne sera pas décrit plus en détail.

La présente invention a également pour objet un ensemble comprenant un dispositif de châssis et un appareil D électrique de coupure débrochable, ledit dispositif de châssis comprenant un châssis C recevant ledit appareil électrique de coupure débrochable D et un système d'embrochage monté dans le châssis C.

Conformément à la présente invention, dans un tel ensemble, le dispositif de châssis consiste en un dispositif de châssis tel que décrit précédemment selon la présente invention.

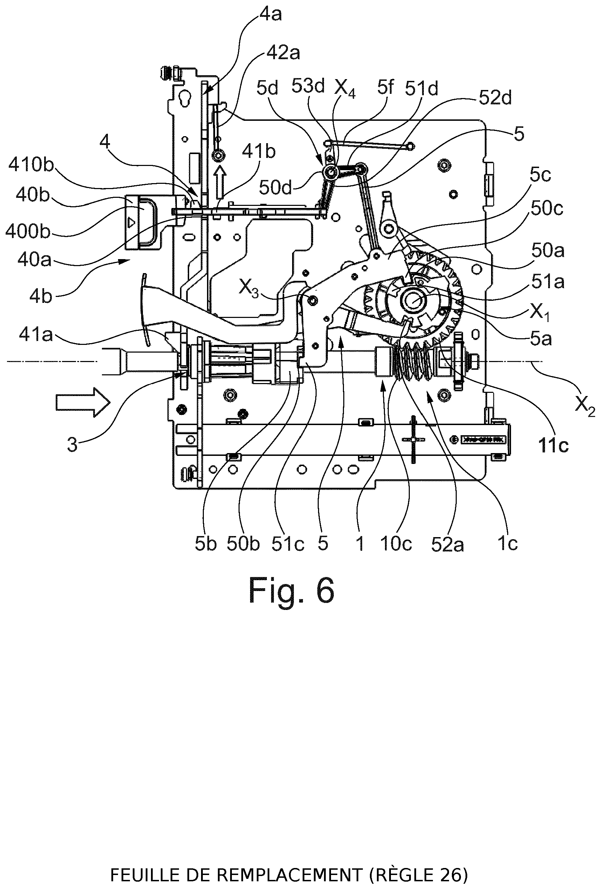

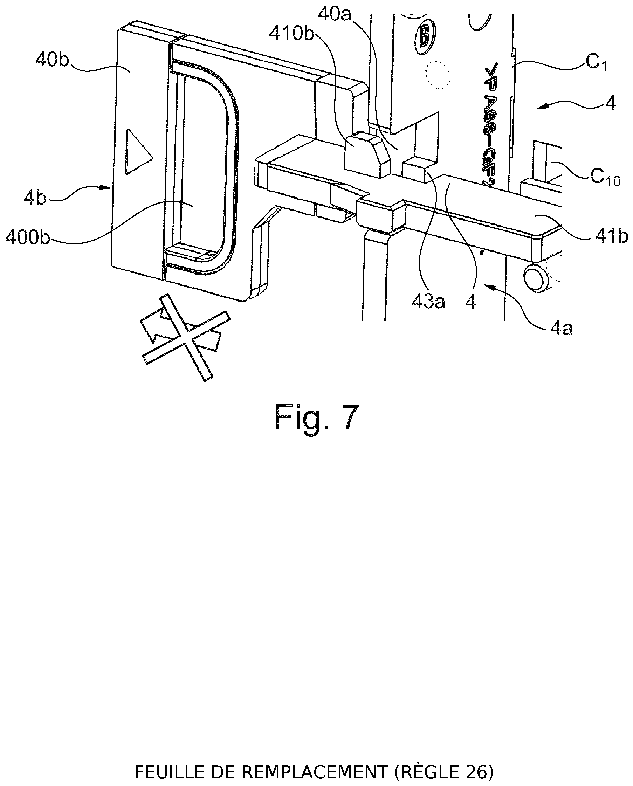

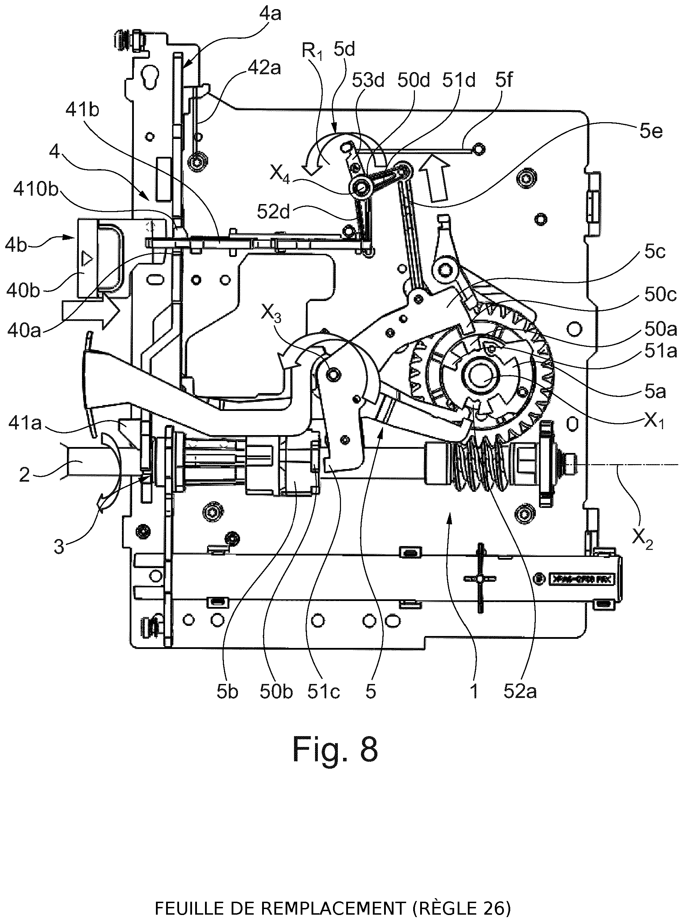

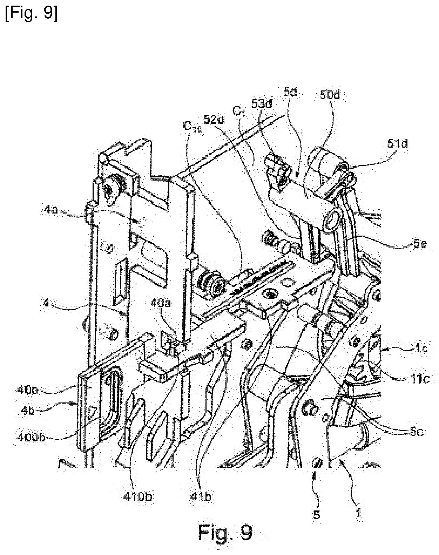

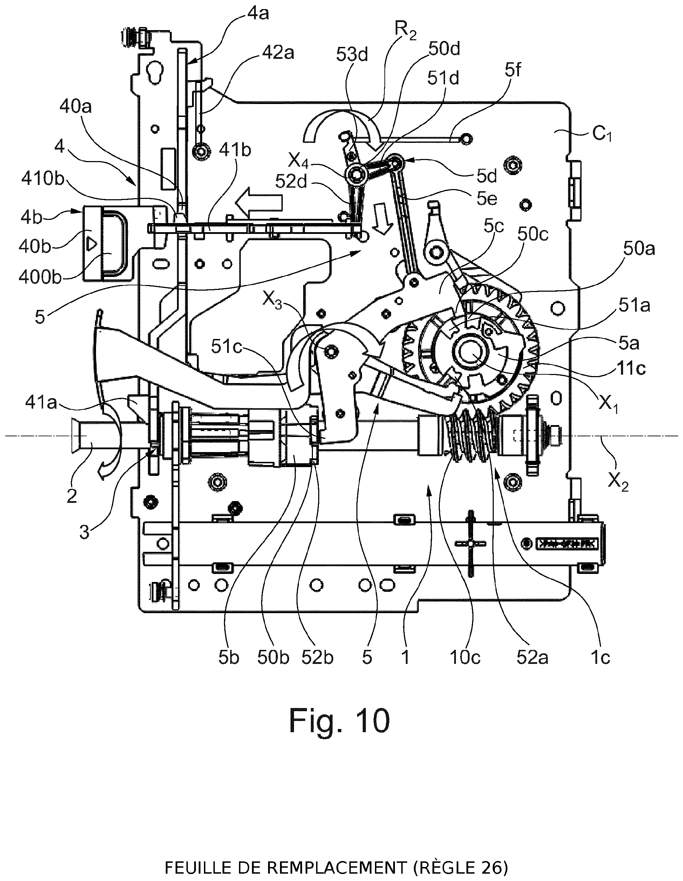

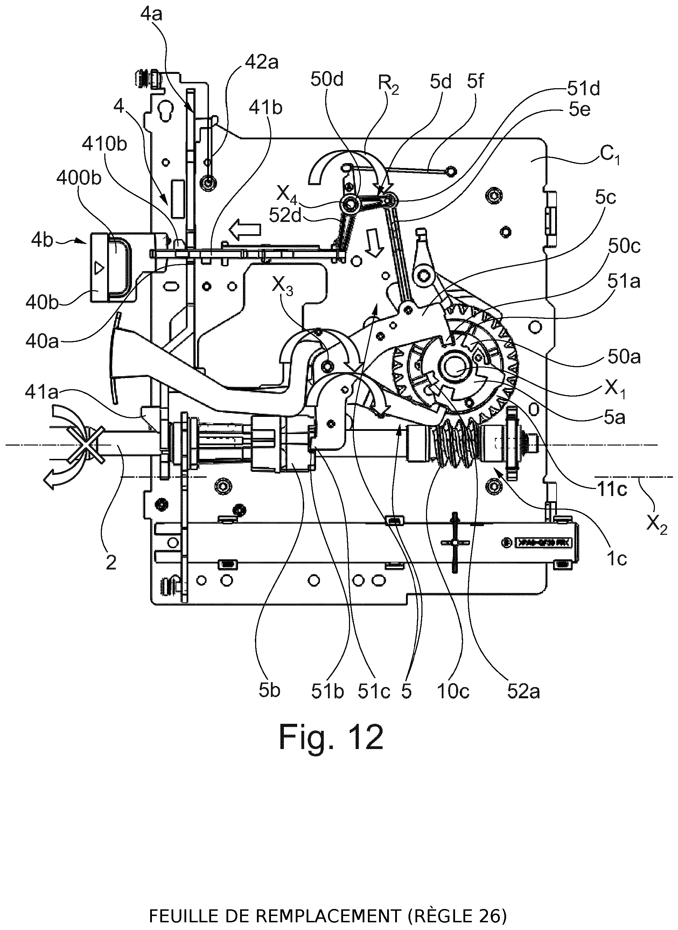

En fonctionnement, l'opérateur qui veut changer la position du mécanisme de transmission pour la faire passer, par exemple, d'une position de transmission correspondant à la position déconnectée à la position suivante correspondant à la position test, va effectuer les étapes suivantes, à partir d'une configuration du dispositif de châssis où le deuxième organe de verrouillage 4b se trouve dans sa première position (figures 4 et 5), après l'enlèvement du cadenas et avant l'insertion de l'organe de manoeuvre 2 dans l'ouverture d'actionnement 3, dans la position déconnectée le ou les éléments de blocage 50c et/ou 51c du ou des leviers de blocage 5c sont insérés dans les logements respectivement 50a et/ou 51a (figures 2, 4 et 6):
- tout d'abord (figure 2), l'opérateur, qui veut insérer l'organe de manoeuvre 1 dans l'ouverture d'actionnement 3 pour actionner le mécanisme de transmission 1 pour changer de position de transmission, va tout d'abord déplacer manuellement le deuxième organe de manoeuvre 4b jusque dans sa deuxième position permettant le déplacement du premier organe de verrouillage 4a depuis sa position de fermeture fermant l'ouverture d'actionnement 3 jusqu'à sa position d'ouverture, le déplacement du deuxième organe de verrouillage 4b vers sa troisième position étant alors bloqué par la butée 410b du deuxième organe de verrouillage 4b venant en butée contre le premier organe de verrouillage 4a dans sa position de fermeture,
- puis (figures 6 et 7), l'opérateur va insérer l'organe de manoeuvre 2 dans l'ouverture d'actionnement 3, ce qui aura pour effet de déplacer le premier organe de manoeuvre 4a, par l'intermédiaire de la rampe 41a, vers sa position d'ouverture libérant le passage (de la butée 410b) du deuxième organe de de verrouillage 4b pour permettre son déplacement jusque dans sa troisième position et permettant l'insertion de l'organe de manoeuvre 2 dans l'ouverture d'actionnement 3 dans l'axe de l'arbre menant 1a jusqu'à son raccordement fonctionnel avec celui-ci,
- puis (figures 8 et 9), l'opérateur va déplacer manuellement le deuxième organe de verrouillage 4b jusque dans sa troisième position, ce qui va actionner, du fait de la coopération par contact de poussée entre la tige 41b du deuxième organe de verrouillage 4b et la branche de liaison 52d de la pièce rotative en étoile 5d de l'ensemble de liaison 5d, 5e, la rotation de ladite pièce rotative en étoile 5d dans un premier sens de rotation R1, plus particulièrement dans un sens antihoraire, entrainant, par l'intermédiaire de la bielle 5e dudit ensemble de liaison 5d, 5e, le pivotement du ou des leviers de blocage 1c, plus particulièrement de la paire de leviers de blocage 1c, dans un sens de pivotement ayant pour effet de retirer les éléments de blocage 50c et 51c du ou desdits leviers de blocage 1c de leurs logements 50a, 50b respectifs et de mettre alors le mécanisme de verrouillage additionnel 5 dans son état de déverrouillage débloquant le mouvement cinématique du mécanisme de transmission 1,
- puis, dans cet état de déverrouillage du mécanisme de verrouillage additionnel 5, l'opérateur, va pouvoir manoeuvrer l'organe de manoeuvre 2 pour actionner le mécanisme de transmission 1, dont le mouvement cinématique est débloqué, jusqu'à atteindre la position de transmission suivante correspondant à la position test (figures 1 et 12). Durant ce passage d'une position à l'autre (figure 10), le ou chaque élément de blocage 51c est en contact avec la surface périphérique externe de la pièce de blocage 5a en forme de disque, sous la sollicitation du moyen de rappel 5f actionnant la pièce rotative en étoile 5d dans le sens inverse R2 entraînant le déplacement du ou des leviers de blocage 5c vers leur position de blocage. La position de blocage est réalisée lorsque le ou chaque élément de blocage 51c se présente en regard du logement 51a de la pièce de blocage 5a correspondant à la position test et vient s'insérer dans ledit logement 51a, la rotation de la pièce rotative en étoile 5d dans ledit sens inverse R2 entraînant également automatiquement le déplacement du deuxième organe de verrouillage 4b dans sa deuxième position,
- puis l'opérateur peut soit déplacer le deuxième organe de verrouillage 4b dans sa première position, soit laisser celui-ci dans sa deuxième position en attente, soit le déplacer à nouveau dans sa troisième position pour déverrouiller le mécanisme de verrouillage additionnel 5 en vue changer de position de transmission pour revenir dans la position de transmission précédente correspondant à la position déconnectée ou dans la position de transmission suivante correspondant à la position connectée.

Plus particulièrement, si l'on se réfère :
- à la figure 2, on peut voir que le premier organe de verrouillage 4a a été déplacé dans sa position de fermeture au moyen du ressort de traction 42a, que le deuxième organe de verrouillage 4b a été déplacé dans une position initiale correspondant à sa deuxième position, que la pièce rotative en étoile 5d est en contact par sa deuxième branche de liaison 52d avec l'extrémité libre de la tige 41b du deuxième organe de verrouillage 4b et que l'ensemble de blocage 5a, 5b, 5c est mis dans son état de blocage du mouvement cinématique du mécanisme de transmission 1 mettant le mécanisme de verrouillage additionnel 5 dans son état de verrouillage par l'insertion de ses deux éléments de blocages de chaque levier de blocage 5c dans les logements 50a, 50b correspondant des pièces de blocage 5a, 5b respectives, lesdits logements 50a, 50b étant indexés sur la position de transmission correspondant à la position déconnectée,
- à la figure 3, on peut voir que la butée 410b du deuxième organe de verrouillage 4b, dans la deuxième position de ce dernier, vient en butée contre le premier organe de verrouillage 4a en position de fermeture (position basse dans une orientation verticale), ce qui empêche/bloque le déplacement du deuxième organe de verrouillage vers sa troisième position,
- aux figures 4 et 5, on peut voir que le deuxième organe de verrouillage 4b est tiré/déplacé en arrière dans sa première position pour empêcher/interdire l'insertion de l'organe de manoeuvre 2 dans l'ouverture d'actionnement 3 du fait du blocage du premier organe de verrouillage 4a dans sa position de fermeture par le deuxième organe de verrouillage 4b dans cette première position,
- aux figures 6 et 7, on peut voir que l'organe de manoeuvre 2 est inséré dans l'ouverture d'actionnement 3 en repoussant le premier organe de verrouillage 4a vers sa position d'ouverture (position haute dans une orientation verticale) grâce à la rampe 41a coopérant avec le premier organe de verrouillage 4a, la position d'ouverture du premier organe de verrouillage 4a ayant pour effet de libérer le passage pour le deuxième organe de verrouillage 4b vers sa troisième position afin de permettre la mise à l'état de déverrouillage du mécanisme de verrouillage additionnel 5, la position d'ouverture du premier organe de verrouillage 4a ayant également pour effet de bloquer le déplacement (ou la sortie) du deuxième organe de verrouillage 4b vers sa première position, du fait d'une surface 411b pratiquée dans la tige 41b de ce dernier qui vient au contact d'une paroi 43a pratiquée dans le premier organe de verrouillage 4a (figure 7).

Ainsi un tel dispositif de châssis, selon la présente invention, permet soit de verrouiller le deuxième organe de verrouillage 4b dans la première position, au moyen par exemple d'un cadenas traditionnel, pour empêcher l'insertion de l'organe de manoeuvre 2 dans l'ouverture d'actionnement 3, ceci dans l'une quelconque des positions de transmission du mécanisme de transmission, par exemple dans l'une quelconque de ses positions de transmission correspondant aux positions déconnectée, test et connectée, soit d'insérer l'organe de de manoeuvre 2 et de déverrouiller le mécanisme de transmission 1 en utilisant le deuxième organe de verrouillage 4b.

D'autre part, comme on peut le voir sur les figures 13 et 14, pour sécuriser l'accès aux bornes de raccordement principales intégrées dans la face arrière du châssis C et non visibles sur les figures annexées, lorsque l'appareil n'est pas dans la position embrochée dans le châssis C ou n'est pas inséré dans ce dernier, le côté arrière du châssis C peut comprendre de manière connue des fenêtres 9 en regard des bornes de raccordement principales et des volets 10 mobiles entre une position de fermeture permettant la fermeture desdites fenêtres pour empêcher l'accès aux bornes de raccordement principales et une position d'ouverture desdites fenêtres pour permettre l'accès auxdites bornes de raccordement principales.

Si on se réfère à nouveau aux figures 13 et 14 on peut voir que dans une forme de réalisation particulière, généralement utilisées dans ce type de dispositif de châssis, les bornes de raccordement principales sont montées dans le côté arrière selon deux rangées de bornes de raccordement principales superposées, une rangée haute et une rangée basse. Dans ce cas, un volet 10 haut est prévu pour les fenêtres 9 de la rangée haute de bornes de raccordement principales et un volet 10 bas est prévu les fenêtres de la rangée basse de bornes de raccordement principales. Les volets 10 sont mobiles dans des supports de volets 9a du type parois et dans lesquelles sont pratiquées les fenêtres 9.

De manière connue, ces dispositifs de châssis équipés de tels volets 10 de sécurisation peuvent comprendre en outre un système de commande desdits volets comportant des pièces de commande 11 mobiles du type poussoir, généralement en forme de T, guidées en translation entre une position enfoncée dans le côté arrière et une position extraite (figures 13 et 14) dans l'espace de réception C3 du châssis C. Le déplacement des pièces de commande 11 depuis leur position extraite jusqu'à leur position enfoncée est réalisé par une poussée de l'appareil D sur ces dernières lors de son coulissement dans l'espace de réception C3 du châssis C vers le côté arrière depuis sa position test pour le mettre en position connectée. Le déplacement des pièces de commande 11 depuis leur position enfoncée jusqu'à leur position extraite peut être réalisé automatiquement grâce à un moyen de rappel lors du coulissement du disjoncteur pour le mettre en position test ou déconnectée ou pour l'extraire de l'espace de réception du châssis. Le système de commande peut comprendre des cames, non visibles sur les figures, reliant les pièces de commande 11 aux volets 10 et étant entraînées par lesdites pièces de commande 11 lors de leur déplacement. Un système de verrouillage permet de verrouiller les volets en bloquant les pièces de commande 11 dans leur position extraite à l'aide de cadenas, non représentés, engagés dans des ouvertures 11a pratiquées dans lesdites pièces de commande 11 empêchant ainsi leur enfoncement.

Chaque volet 10 est généralement constitué par deux panneaux ajourés mobiles en coulissement en sens inverse l'un de l'autre et disposés l'un derrière l'autre de sorte à permettre, dans la position de fermeture du volet, un recouvrement des jours de l'un des panneaux par les parties pleines de l'autre panneau et, dans la position d'ouverture du volet, la mise en regard des jours de l'un des panneaux avec les jours de l'autre panneau, lesdits jours formant les fenêtres d'accès aux bornes de raccordement principales. Dans une autre forme de réalisation connue, chaque volet 10 est constitué par un panneau ajouré mobile en coulissement derrière un panneau fixe ajouré et disposés l'un derrière l'autre de sorte à permettre, dans la position de fermeture du volet 10, un recouvrement des jours de l'un des panneaux par les parties pleines de l'autre panneau et, dans la position d'ouverture du volet 10, la mise en regard des jours de l'un des panneaux avec les jours de l'autre panneau, lesdits jours formant les fenêtres d'accès aux bornes de raccordement principales.

Dans l'art antérieur les systèmes nécessitent en plus du deuxième organe de verrouillage 4b, un bouton pour déverrouiller le mécanisme de verrouillage additionnel. En outre, grâce au dispositif de châssis selon la présente invention, le mécanisme de verrouillage additionnel 5 ne peut pas être déverrouillé dans la première ou deuxième position du deuxième organe de verrouillage 4b, contrairement aux systèmes existants qui permettent toujours d'actionner le bouton, quel que soit la position du deuxième organe de verrouillage 4b.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de châssis pour appareil électrique de coupure débrochable, ledit dispositif de châssis comprenant un châssis (C) apte à recevoir un appareil (D) électrique de coupure débrochable et un système d'embrochage, monté dans le châssis (C), comprenant un mécanisme de transmission (1) mécanique apte à être raccordé fonctionnellement à un tel appareil (D) inséré dans ledit châssis (C) et à être actionné dans plusieurs positions de transmission correspondant chacune à une position fonctionnelle de l'appareil (D), un organe de manoeuvre (2) amovible permettant d'actionner le mécanisme de transmission (1) lorsqu'il est inséré fonctionnellement dans une ouverture d'actionnement (3) du châssis (C), un mécanisme de verrouillage principal (4) comprenant un premier organe de verrouillage (4a) mobile entre une position de fermeture empêchant l'insertion de l'organe de manoeuvre (2) dans l'ouverture d'actionnement (3) et une position d'ouverture permettant ladite insertion et un deuxième organe de verrouillage (4b) mobile apte à être déplacé manuellement entre une première position bloquant le premier organe de verrouillage (4a) dans sa position de fermeture et une deuxième position le débloquant et un mécanisme de verrouillage additionnel (5) apte à être mis, à chaque position de transmission, d'une part, lorsque le premier organe de verrouillage (4a) se trouve dans l'une quelconque de ses première et deuxième positions, dans un état de verrouillage bloquant le mouvement cinématique du mécanisme de transmission (1) et, d'autre part, dans un état de déverrouillage débloquant ledit mouvement, **caractérisé en ce que** le deuxième organe de verrouillage (4b) est apte à coopérer avec le mécanisme de verrouillage additionnel (5) et à être déplacé manuellement, lorsque le premier organe de verrouillage (4a) est dans sa position d'ouverture, dans une troisième position actionnant, grâce à ladite coopération, le mécanisme de verrouillage additionnel (5) de sorte à le mettre dans son état de déverrouillage.

2. Dispositif de châssis, selon la revendication 1, **caractérisé en ce que** le mécanisme de verrouillage additionnel (5) comprend un ensemble de blocage (5a, 5b, 5c) mobile configuré pour être entraîné dans un état de blocage du mouvement cinématique du mécanisme de transmission (1) mettant le mécanisme de verrouillage additionnel (5) dans son état de verrouillage et dans un état de déblocage dudit mouvement cinématique mettant le mécanisme de verrouillage additionnel (5) dans son état de déverrouillage, un ensemble de liaison (5d, 5e) apte à coopérer avec le deuxième organe de verrouillage (4b) et relié audit ensemble de blocage (5a, 5b, 5c) et un moyen de rappel (5f), ledit ensemble de liaison (5d, 5e) étant apte à être actionné, d'une part, par le deuxième organe de verrouillage (4b) lors de son déplacement dans sa troisième position de sorte à entraîner ledit ensemble de blocage (5a, 5b, 5c) dans son état de déblocage et, d'autre part, par le moyen de rappel (5f) de sorte à entraîner l'ensemble de blocage (5a, 5b, 5c) dans son état de blocage.

3. Dispositif de châssis, selon la revendication 2, **caractérisé en ce que** l'ensemble de liaison (5d, 5e) coopère avec le deuxième organe de verrouillage (4b) de sorte que le déplacement du deuxième organe de verrouillage (4b) dans sa deuxième position depuis sa troisième position est réalisé automatiquement sous la sollicitation du moyen de rappel (5f) lors de son actionnement de l'ensemble de liaison (5d, 5e) entraînant l'ensemble de blocage (5a, 5b, 5c) dans son état de blocage.

4. Dispositif de châssis, selon l'une quelconque des revendications 2 à 3, **caractérisé en ce que** le mécanisme de transmission (1) comprend un arbre menant (1a) s'étendant dans l'axe de l'ouverture d'actionnement (3) et étant apte à être relié à l'organe de manoeuvre (2) lorsque ce dernier est inséré fonctionnellement dans l'ouverture d'actionnement (3), un arbre mené (1b) d'axe de rotation (X1) perpendiculaire à l'axe de rotation (X2) de l'arbre menant (1a) et permettant le raccordement fonctionnel à un appareil (D) électrique de coupure débrochable, une transmission (1c) reliant l'arbre menant (1a) à l'arbre mené (1b) de sorte que la rotation de l'arbre menant (1a), sous l'effet de l'actionnement de l'organe de manoeuvre (2), entraîne la rotation de l'arbre mené (1b) et **en ce que** l'ensemble de blocage (5a, 5b, 5c) est configuré, dans son état de blocage, pour bloquer la rotation de l'arbre mené (1b) et/ou la rotation de l'arbre menant (1a) et, dans son état de déblocage, pour débloquer la ou lesdites rotation(s).

5. Dispositif de châssis, selon l'une quelconque des revendications 2 à 4, **caractérisé en ce que** l'ensemble de liaison (5d, 5e) comprend une pièce rotative en étoile (5d) comportant un corps central rotatif (50d) monté en rotation autour d'un axe de rotation (X4), de préférence parallèle à l'axe de rotation (X1) de l'arbre mené (1b), et un élément de transmission (5e), ledit corps central rotatif (50d) portant au moins deux branches de liaison (51d, 52d, 53d) s'étendant radialement dudit corps central rotatif (50d), à savoir une première branche de liaison (51d) reliée, par l'élément de transmission (5e), à l'ensemble de blocage (5a, 5b, 5c) et une deuxième branche de liaison (52d) apte et destinée à coopérer, par contact, avec le deuxième organe de verrouillage (4b) de sorte que le déplacement dudit organe de verrouillage (4b) dans sa troisième position actionne la rotation du corps central rotatif (50d) dans un premier sens (R1) entraînant l'ensemble de blocage (5a, 5b, 5c) dans sa position de déblocage et **en ce que** le moyen de rappel (5f) est apte à solliciter la rotation de la pièce rotative en étoile (5d) dans un deuxième sens de rotation (R2), contraire audit premier sens de rotation (R1), de sorte à entraîner automatiquement l'ensemble de blocage (5a, 5b, 5c) dans sa position de blocage.

6. Dispositif de châssis, selon la revendication 5, **caractérisé en ce que** le moyen de rappel (5f) consiste soit en un ressort de traction ou de compression et le corps central rotatif (50d) porte une troisième branche (53d) reliée audit moyen de rappel (5f) fixé sur le châssis (C), soit en un ressort de torsion relié au corps central rotatif (50d) pour solliciter directement ce dernier, soit en la gravité.

7. Dispositif de châssis, selon l'une quelconque des revendications 4 à 6, **caractérisé en ce que** le premier organe de verrouillage (4a) est mobile dans une direction perpendiculaire aux axes de rotation (X1, X2) des arbres menant et mené (1a, 1b) et **en ce que** le deuxième organe de verrouillage (4b) est mobile dans une direction parallèle à l'axe de rotation (X2) de l'arbre menant (1a).

8. Dispositif de châssis, selon la revendication 7, **caractérisé en ce que** le châssis (C) comprend une paroi de montage (C1) perpendiculaire à l'arbre mené (5b) et **en ce que** le deuxième organe de verrouillage (4b) est déplacé, par rapport au châssis (C) fixe, dans ses première position, deuxième position et troisième position, en étant monté en coulissement dans une rainure de coulissement (C10) pratiquée dans ladite paroi de montage (C1) en s'étendant parallèlement à l'arbre menant (5a).

9. Dispositif de châssis, selon l'une quelconque des revendications 2 à 8, **caractérisé en ce que** le deuxième organe de verrouillage (4b) présente une forme de clé comprenant une tête (40b) munie d'un oeillet (400b) et une tige (41b) apte à coopérer avec le premier organe de verrouillage (4a) et avec l'ensemble de liaison (5d, 5e) du mécanisme de verrouillage additionnel (5), le cas échéant avec la deuxième branche de liaison (52d) définie dans la revendication 9.

10. Ensemble comprenant un dispositif de châssis et un appareil électrique de coupure débrochable, ledit dispositif de châssis comprenant un châssis (C) recevant ledit appareil électrique de coupure débrochable (D) et un système d'embrochage monté dans le châssis (C), **caractérisé en ce que** le dispositif de châssis consiste en un dispositif de châssis selon l'une quelconque des revendications 1 à 9.

## Patentansprüche

1. Rahmenvorrichtung für ein steckbares elektrisches Schaltgerät, wobei die Rahmenvorrichtung Folgendes umfasst: einen Rahmen (C) umfasst, der dazu in der Lage ist, ein steckbares elektrisches Schaltgerät (D) aufzunehmen, und ein im Rahmen (C) montiertes Stecksystem, umfassend einen mechanischen Übertragungsmechanismus (1), der dazu in der Lage ist, funktionell mit einem solchen in den Rahmen (C) eingesetzten Gerät (D) verbunden zu sein und in mehreren Übertragungsstellungen, die jeweils einer funktionellen Stellung des Geräts (D) entsprechen, betätigt zu werden, ein abnehmbares Betätigungsorgan (2), das es ermöglicht, den Übertragungsmechanismus (1) zu betätigen, wenn es funktionell in eine Betätigungsöffnung (3) des Rahmens (C) eingesetzt ist, einen Hauptverriegelungsmechanismus (4), der Folgendes umfasst: ein erstes Verriegelungsorgan (4a), das zwischen einer Schließstellung, die das Einsetzen des Betätigungsorgans (2) in die Betätigungsöffnung (3) verhindert, und einer Öffnungsstellung, die das Einsetzen ermöglicht, beweglich ist, und ein zweites bewegliches Verriegelungsorgan (4b), das dazu in der Lage ist, zwischen einer ersten Stellung, die das erste Verriegelungsorgan (4a) in seiner Schließstellung blockiert, und einer zweiten Stellung, in der es freigegeben ist, manuell verschoben zu werden, und einen zusätzlichen Verriegelungsmechanismus (5), der dazu in der Lage ist, in jeder Übertragungsstellung, wenn sich das erste Verriegelungsorgan (4a) in einer beliebigen seiner ersten und zweiten Stellung befindet, einerseits in einen Verriegelungszustand, der die kinematische Bewegung des Übertragungsmechanismus (1) blockiert, und andererseits in einen Entriegelungszustand, der die Bewegung freigibt, versetzt zu werden, **dadurch gekennzeichnet, dass** das zweite Verriegelungsorgan (4b) dazu in der Lage ist, mit dem zusätzlichen Verriegelungsmechanismus (5) zusammenzuwirken und, wenn sich das erste Verriegelungsorgan (4a) in seiner Öffnungsstellung befindet, manuell in eine dritte Stellung verschoben zu werden, die dank des Zusammenwirkens den zusätzlichen Verriegelungsmechanismus (5) betätigt, um ihn in seinen Entriegelungszustand zu versetzen.

2. Rahmenvorrichtung nach Anspruch 1, **dadurch gekennzeichnet, dass** der zusätzliche Verriegelungsmechanismus (5) Folgendes umfasst: eine bewegliche Blockierbaugruppe (5a, 5b, 5c), die dazu konfiguriert ist, in einen Zustand der Blockierung der kinematischen Bewegung des Übertragungsmechanismus (1), der den zusätzlichen Verriegelungsmechanismus (5) in seinen Verriegelungszustand versetzt, und in einen Zustand der Freigabe der kinematischen Bewegung, der den zusätzlichen Verriegelungsmechanismus (5) in seinen Entriegelungszustand versetzt, bewegt zu werden, eine Verbindungsbaugruppe (5d, 5e), die dazu in der Lage ist, mit dem zweiten Verriegelungsorgan (4b) zusammenzuwirken und mit der Blockierbaugruppe (5a, 5b, 5c) und einem Rückstellmittel (5f) verbunden ist, wobei die Verbindungsbaugruppe (5d, 5e) dazu in der Lage ist, einerseits durch das zweite Verriegelungsorgan (4b) bei seiner Bewegung in seine dritte Stellung betätigt zu werden, sodass die Blockierbaugruppe (5a, 5b, 5c) in ihren Freigabezustand bewegt wird, und andererseits durch das Rückstellmittel (5f) betätigt zu werden, um die Blockierbaugruppe (5a, 5b, 5c) in ihren Blockierzustand zu bewegen.

3. Rahmenvorrichtung nach Anspruch 2, **dadurch gekennzeichnet, dass** die Verbindungsbaugruppe (5d, 5e) mit dem zweiten Verriegelungsorgan (4b) zusammenwirkt, sodass die Bewegung des zweiten Verriegelungsorgans (4b) in seine zweite Stellung aus seiner dritten Stellung unter der Beanspruchung des Rückstellmittels (5f) bei seiner Betätigung der Verbindungsbaugruppe (5d, 5e), die die Blockierbaugruppe (5a, 5b, 5c) in ihren Blockierzustand bewegt, automatisch erfolgt.

4. Rahmenvorrichtung nach einem der Ansprüche 2 bis 3, **dadurch gekennzeichnet, dass** der Übertragungsmechanismus (1) Folgendes umfasst: eine treibende Welle (1a), die sich in der Achse der Betätigungsöffnung (3) erstreckt und dazu in der Lage ist, mit dem Betätigungsorgan (2) verbunden zu sein, wenn dieses funktionell in die Betätigungsöffnung (3) eingesetzt ist, eine getriebene Welle (1b) mit einer Drehachse (X1), die senkrecht zur Drehachse (X2) der treibenden Welle (1a) verläuft und den funktionellen Anschluss an ein steckbares elektrisches Schaltgerät (D) ermöglicht, ein Getriebe (1c), das die treibende Welle (1a) mit der getriebenen Welle (1b) verbindet, sodass die Drehung der treibenden Welle (1a) unter der Wirkung der Betätigung des Betätigungsorgans (2) die Drehung der getriebenen Welle (1b) bewirkt, und dadurch, dass die Blockierbaugruppe (5a, 5b, 5c) dazu konfiguriert ist, in ihrem Blockierzustand die Drehung der angetriebenen Welle (1b) und/oder die Drehung der treibenden Welle (1a) zu blockieren und in ihrem Freigabezustand die Drehung(en) freizugeben.

5. Rahmenvorrichtung nach einem der Ansprüche 2 bis 4, **dadurch gekennzeichnet, dass** die Verbindungsbaugruppe (5d, 5e) ein sternförmiges Drehteil (5d) umfasst, das Folgendes aufweist: einen zentralen Drehkörper (50d), der um eine Drehachse (X4), die vorzugsweise parallel zur Drehachse (X1) der getriebenen Welle (1b) verläuft, drehbar gelagert ist, und ein Getriebeelement (5e), wobei der zentrale Drehkörper (50d) mindestens zwei Verbindungsschenkel (51d, 52d, 53d) trägt, die sich radial vom zentralen Drehkörper (50d) aus erstrecken, und zwar einen ersten Verbindungsschenkel (51d), der über das Getriebeelement (5e) mit der Blockierbaugruppe (5a, 5b, 5c) verbunden ist, und einen zweiten Verbindungsschenkel (52d) der dazu in der Lage und bestimmt ist, durch Kontakt mit dem zweiten Verriegelungsorgan (4b) zusammenzuwirken, sodass die Bewegung des Verriegelungsorgans (4b) in seine dritte Stellung die Drehung des zentralen Drehkörpers (50d) in einer ersten Richtung (R1) bewirkt, wodurch die Blockierbaugruppe (5a, 5b, 5c) in ihre Freigabestellung bewegt wird, und dadurch, dass das Rückstellmittel (5f) dazu in der Lage ist, die Drehung des sternförmigen Drehteils (5d) in einer zur ersten Drehrichtung (R1) entgegengesetzten zweiten Drehrichtung (R2) vorzuspannen, sodass die Blockierbaugruppe (5a, 5b, 5c) automatisch in ihre Blockierstellung bewegt wird.

6. Rahmenvorrichtung nach Anspruch 5, **dadurch gekennzeichnet, dass** das Rückstellmittel (5f) aus Folgendem besteht: entweder aus einer Zug- oder Druckfeder, wobei der zentrale Drehkörper (50d) einen dritten Schenkel (53d) trägt, der mit dem am Rahmen (C) befestigten Rückstellmittel (5f) verbunden ist, oder aus einer Torsionsfeder, die mit dem zentralen Drehkörper (50d) verbunden ist, um diesen direkt vorzuspannen, oder aus der Schwerkraft.

7. Rahmenvorrichtung, nach einem der Ansprüche 4 bis 6, **dadurch gekennzeichnet, dass** das erste Verriegelungsorgan (4a) in einer Richtung senkrecht zu den Drehachsen (X1, X2) der treibenden und der getriebenen Welle (1a, 1b) beweglich ist und dass das zweite Verriegelungsorgan (4b) in einer Richtung parallel zur Drehachse (X2) der treibenden Welle (1a) beweglich ist.

8. Rahmenvorrichtung nach Anspruch 7, **dadurch gekennzeichnet, dass** der Rahmen (C) eine Montagewand (C1) senkrecht zur getriebenen Welle (5b) umfasst und dass das zweite Verriegelungsorgan (4b) in Bezug auf den festen Rahmen (C) in seine erste Stellung, seine zweite Stellung und seine dritte Stellung bewegt wird, indem es gleitend in einer Gleitnut (C10) montiert ist, die in der Montagewand (C1) ausgebildet ist und sich parallel zur treibenden Welle (5a) erstreckt.

9. Rahmenvorrichtung, nach einem der Ansprüche 2 bis 8, **dadurch gekennzeichnet, dass** das zweite Verriegelungsorgan (4b) eine Schlüsselform aufweist, die einen mit einer Öse (400b) versehenen Kopf (40b) und einen Schaft (41b) aufweist und dazu in der Lage ist, mit dem ersten Verriegelungsorgan (4a) und mit der Verbindungsbaugruppe (5d, 5e) des zusätzlichen Verriegelungsmechanismus (5) zusammenzuwirken, gegebenenfalls mit dem in Anspruch 9 definierten zweiten Verbindungsschenkel (52d).

10. Baugruppe, umfassend eine Rahmenvorrichtung und ein steckbares elektrisches Schaltgerät, wobei die Rahmenvorrichtung einen Rahmen (C) umfasst, der das steckbare elektrische Schaltgerät (D) und ein im Rahmen (C) montiertes Stecksystem aufnimmt, **dadurch gekennzeichnet, dass** die Rahmenvorrichtung aus einer Rahmenvorrichtung nach einem der Ansprüche 1 bis 9 besteht.

## Claims

1. Frame device for plug-in cutting electrical appliances, said frame device comprising a frame (C) designed to receive a plug-in cutting electrical appliance (D) and a plug-in system mounted in the frame (C), comprising a mechanical transmission mechanism (1) designed to be functionally connected to such an appliance (D) inserted in said frame (C) and to be actuated in several transmission positions, each corresponding to a functional position of the appliance (D), a removable operating member (2) for actuating the transmission mechanism (1) when functionally inserted in an operating opening (3) of the frame (C), a main locking mechanism (4) comprising a first locking member (4a) movable between a closed position preventing insertion of the operating member (2) into the operating opening (3) and an open position allowing said insertion, and a second locking member (4b) that is movable manually between a first position blocking the first locking member (4a) in the closed position and a second position releasing said locking member, and an additional locking mechanism (5) capable of being moved, in each transmission position, firstly when the first locking member (4a) is in any one of the first and second positions, into a locked state preventing the kinematic movement of the transmission mechanism (1), and secondly into an unlocked state permitting said movement, **characterized in that** the second locking member (4b) is able to cooperate with the additional locking mechanism (5) and can be moved manually, when the first locking member (4a) is in the open position, into a third position actuating, by means of said cooperation, the additional locking mechanism (5) so as to bring said locking mechanism to the unlocked state.

2. Frame device according to Claim 1, **characterized in that** the additional locking mechanism (5) comprises a movable blocking assembly (5a, 5b, 5c) designed to be driven into a blocked state preventing the kinematic movement of the transmission mechanism (1) by bringing the additional locking mechanism (5) to the locked state and into a released state enabling said kinematic movement by bringing the additional locking mechanism (5) to the unlocked state, a linking assembly (5d, 5e) capable of cooperating with the second locking member (4b) and connected to said blocking assembly (5a, 5b, 5c) and return means (5f), said linking assembly (5d, 5e) being able to be actuated firstly by the second locking member (4b) when moved into the third position so as to drive said blocking assembly (5a, 5b, 5c) into the unlocked state, and secondly by the return means (5f) so as to drive the blocking assembly (5a, 5b, 5c) into the blocked state.

3. Frame device according to Claim 2, **characterized in that** the linking assembly (5d, 5e) cooperates with the second locking member (4b) so that the second locking member (4b) is moved automatically into the second position from the third position by the return means (5f) following actuation of the linking assembly (5d, 5e) driving the blocking assembly (5a, 5b, 5c) into the blocked state.

4. Frame device according to any one of Claims 2 to 3, **characterized in that** the transmission mechanism (1) comprises a driving shaft (1a) extending along the axis of the operating opening (3) that is designed to be connected to the operating member (2) when said operating member is functionally inserted into the operating opening (3), a driven shaft (1b) with a rotation axis (X1) perpendicular to the rotation axis (X2) of the driving shaft (1a) enabling the functional connection to a plug-in cutting electrical appliance (D), a transmission (1c) connecting the driving shaft (1a) to the driven shaft (1b) so that the rotation of the driving shaft (1a), when actuated by the operating member (2), causes the rotation of the driven shaft (1b), and **in that** the blocking assembly (5a, 5b, 5c) is designed to prevent the rotation of the driven shaft (1b) and/or the rotation of the driving shaft (1a) when in the blocked state, and to permit said rotation when in the released state.

5. Frame device according to any one of Claims 2 to 4, **characterized in that** the linking assembly (5d, 5e) comprises a rotating star-shaped part (5d) comprising a rotary central body (50d) mounted in rotation about a rotation axis (X4), preferably parallel to the rotation axis (X1) of the driven shaft (1b), and a transmission element (5e), said rotary central body (50d) carrying at least two linking arms (51d, 52d, 53d) extending radially from said rotary central body (50d), specifically a first linking arm (51d) connected, by the transmission element (5e), to the blocking assembly (5a, 5b, 5c) and a second linking arm (52d) designed to cooperate, by contact, with the second locking member (4b) so that the movement of said locking member (4b) into the third position actuates the rotation of the rotary central body (50d) in a first direction (R1) driving the blocking assembly (5a, 5b, 5c) into the released position, and **in that** the return means (5f) are able to cause the rotation of the rotating star-shaped part (5d) in a second direction of rotation (R2), opposite to said first direction of rotation (R1), so as to automatically drive the blocking assembly (5a, 5b, 5c) into the blocked position.

6. Frame device according to Claim 5, **characterized in that** the return means (5f) comprise either a tension spring or compression spring, and the rotary central body (50d) carries a third arm (53d) connected to said return means (5f) fastened to the frame (C), or a torsion spring connected to the rotary central body (50d) to drive said rotary central body directly, or gravity.

7. Frame device according to any one of Claims 4 to 6, **characterized in that** the first locking member (4a) is movable in a direction perpendicular to the rotational axes (X1, X2) of the driving and driven shafts (1a, 1b) and **in that** the second locking member (4b) is movable in a direction parallel to the rotation axis (X2) of the driving shaft (1a).

8. Frame device according to Claim 7, **characterized in that** the frame (C) comprises a mounting wall (C1) perpendicular to the driven shaft (5b) and **in that** the second locking member (4b) is moved, relative to the static frame (C), into the first, second and third positions by being slidingly mounted in a sliding slot (C10) formed in said mounting wall (C1) and extending parallel to the driving shaft (5a).

9. Frame device according to any one of Claims 2 to 8, **characterized in that** the second locking member (4b) is key-shaped and comprises a head (40b) provided with an eyelet (400b) and a rod (41b) capable of cooperating with the first locking member (4a) and with the linking assembly (5d, 5e) of the additional locking mechanism (5), and where applicable with the second linking arm (52d) as defined in Claim 9.

10. Assembly comprising a frame device and a plug-in cutting electrical appliance, said frame device comprising a frame (C) receiving said plug-in cutting electrical appliance (D) and a plug-in system mounted in the frame (C), **characterized in that** the frame device is a frame device according to any one of Claims 1 to 9.
